# EUROPÄISCHE PATENTANMELDUNG

(11) **EP 4 527 183 A1**
(43) Veröffentlichungstag der Anmeldung: **26.03.2025**
(21) Anmeldenummer: 24198209.9
(22) Anmeldetag: 03.09.2024
(51) Int. Cl.: A01D 45/00

(54) **VORRICHTUNG UND VERFAHREN**

(30) Priorität: 19.09.2023 DE 102023125374
(71) Anmelder: Neubauer Automation OHG, 59514 Welver (DE)
(72) Erfinder: Neubauer, Christoph, 59514 Welver (DE)
(74) Vertreter: Fritz Patent- und Rechtsanwälte PartmbB

(57) **Zusammenfassung**

Die Erfindung betrifft eine Vorrichtung zum Ernten von Spargel, umfassend ein Fahrzeug (1), das über einen Boden fahren kann, in dem Spargel angepflanzt ist und eine Sensoreinrichtung zum Erkennen einer einzelnen Spargelstange, die in einem zur Ernte geeigneten Zustand ist und eine Entnahmeeinrichtung (5) mit wenigstens einem Stechkopf (5a) zum Entnehmen einzelner Spargelstangen aus dem Boden und eine Zwischenspeichereinrichtung (8) zur Zwischenspeicherung des aus dem Boden entnommenen Spargels in wenigstens einem Magazin (9) und Ablage in einen Sammelbehälter (7) und eine Steuerungseinrichtung wenigstens zur Steuerung der Entnahmeeinrichtung (5) und der Zwischenspeichereinrichtung (8). Das Magazin (9) der Zwischenspeichereinrichtung (8) ist wenigstens unter dem Stechkopf (5a) positionierbar, um den aus dem Boden entnommenen Spargel, insbesondere direkt aufzunehmen. Weiter betrifft die Erfindung ein Verfahren zum Betreiben der Vorrichtung.

## Beschreibung

Die vorliegende Erfindung betrifft eine Vorrichtung zum Ernten von Spargel mit einem Fahrzeug, das über den Boden fahren kann und mittels einer Entnahmeeinrichtung aus dem Boden entnehmen kann.

Aus der DE 10 2007 008 330 A1 ist ein Ernteroboter bekannt geworden. Der Ernteroboter umfasst ein Fahrzeug, welches über den Boden fährt und den Spargel mittels eines Stechkopfes aus dem Boden entnimmt. Die Steuerung erfolgt über Kameras, die den Boden nach Spargel abscannen. Der entnommene Spargel wird in einem Aufnahmefach abgelegt und dann weiter in Erntekisten abgelegt. Die Ablage der Spargelstangen beschränkt die Geschwindigkeit, mit welcher der Spargel geerntet werden kann, was sich in höheren Kosten für den geernteten Spargel niederschlägt.

Es ist deshalb die Aufgabe der vorliegenden Erfindung eine Vorrichtung und ein Verfahren zum Ernten von Spargel zur Verfügung zu stellen, durch welche eine schnellere und kostengünstigere Ernte des Spargels ermöglicht wird.

Die Aufgabe wird gelöst durch eine Vorrichtung mit den Merkmalen nach Anspruch 1 und ein Verfahren zum Ernten von Spargel mit den Merkmalen nach Anspruch 12. Weiterbildungen sind Gegenstand der Unteransprüche. Weitere Merkmale und Vorteile sind Bestandteile der allgemeinen Beschreibung und der Beschreibung des Ausführungsbeispiels.

Die erfindungsgemäße Vorrichtung zum Ernten von Spargel, umfasst
- wenigstens ein Fahrzeug, das über einen Boden fahren kann, in dem Spargel angepflanzt ist;
- wenigstens eine Sensoreinrichtung zum Erkennen einer einzelnen Spargelstange, die in einem zur Ernte geeigneten Zustand ist;
- wenigstens eine Entnahmeeinrichtung mit wenigstens einem Stechkopf zum Entnehmen einzelner Spargelstangen aus dem Boden;
- wenigstens eine Zwischenspeichereinrichtung zur Zwischenspeicherung des aus dem Boden entnommenen Spargels und zur Ablage in einen Sammelbehälter;
- wenigstens eine Steuerungseinrichtung wenigstens zur Steuerung der Entnahmeeinrichtung und der Zwischenspeichereinrichtung.

Es ist wenigstens ein Magazin der Zwischenspeichereinrichtung wenigstens teilweise unter dem Stechkopf positionierbar, um den aus dem Boden entnommenen Spargel, insbesondere direkt aufzunehmen.

Die Erfindung hat viele Vorteile. Ein erheblicher Vorteil der Erfindung ist, dass der Spargel von dem Stechkopf der Entnahmeeinrichtung direkt in dem Magazin ablegbar ist, insbesondere ohne andere weitere zwischengeschaltete Handhabungsschritte. Vorteilhaft kann dadurch die Geschwindigkeit, mit welcher der Spargel aus dem Boden entnehmbar ist, erheblich gesteigert werden. Darüber hinaus kann eine besonders schonende Handhabung für den Spargel gewährleistet werden, sodass keine Zwischenschritte durch andere Einrichtungen notwendig sind. Bevorzugt ist die Zwischenspeichereinrichtung an der Entnahmeeinrichtung aufgenommen und insbesondere lösbar befestigt. Vorteilhaft kann eine Übergabe dadurch zeitlich besonders schnell erfolgen. Weiter kann die Zwischenspeichereinrichtung zur Reparatur oder zum Austausch entfernt werden. Dadurch kann eine noch höhere Produktivität gewährleistet werden, sodass die Kosten für den geernteten Spargel noch weiter sinken.

Besonders bevorzugt umfasst das Magazin wenigstens einen Speicherraum, in welchem der Spargel zur Ablage in einem Sammelbehälter zwischengespeichert werden kann. Es ist wenigstens eine bewegliche Klappe vorhanden, um den Spargel in dem Sammelbehälter abzulegen. Vorteilhaft kann der Spargel durch die bewegliche Klappe direkt in einen Sammelbehälter aus geringer Höhe fallen gelassen werden, ohne dass der Spargel beschädigt wird. Vorteilhaft ist ein Ablegen durch die Klappe schnell und effizient möglich. Vorzugsweise umfasst das Magazin wenigstens zwei oder mehr bewegliche Klappen, welche insbesondere ineinandergreifen und/oder vorzugsweise wenigstens teilweise eine Zwischenspeicherraum bilden.

Vorteilhaft ist wenigstens eine Klappe, und insbesondere jeweils alle Klappen, durch wenigstens eine Gleitlagereinheit beweglich gelagert. Vorteilhaft ist eine Gleitlagereinheit besonders kostengünstig. Darüber hinaus ist eine Gleitlagereinheit auch besonders robust gegenüber Verschmutzung. Weiter vorteilhaft ermöglicht die Gleitlagereinheit eine Öffnung der beweglichen Klappe.

Insbesondere umfasst die Zwischenspeichereinrichtung wenigstens eine Lagerungseinheit zur beweglichen Lagerung, und insbesondere zur Verschiebung des Magazins. Vorzugsweise umfasst die Lagerungseinheit wenigstens eine Führungsschiene, und insbesondere zwei oder mehr Führungsschienen, mit Führungsrollen. Vorteilhaft weisen die Führungsschienen und die Führungsrollen ineinandergreifende Konturen auf, wie beispielsweise ein Keilprofil. Vorteilhaft ermöglicht die Lagerungseinheit eine Verschiebung des Magazins und somit wenigstens eine Übergabe des entnommenen Spargels an das Magazin.

Vorzugsweise sind mehrere Führungsschienen miteinander verbunden. Vorteilhaft kann dadurch eine Bewegung einer Führungsschiene auch auf andere Führungsschienen übertragen werden.

Insbesondere ist wenigstens ein Öffnungsmechanismus zur Öffnung der Klappen umfasst. Der Öffnungsmechanismus umfasst vorzugsweise wenigstens eine Kurvenscheibe und wenigstens ein Leitelement, wie ein Kugellager, welches auf der Kurven scheibe abgleitet. Vorteilhaft ermöglicht der Öffnungsmechanismus eine einfache Öffnung der Klappe durch Umlenkung einer Bewegung, beispielsweise resultierend aus einer Verschiebung, insbesondere durch die Lagerungseinheit.

Insbesondere erfolgt eine Öffnung des Magazins durch eine Verschiebung des Magazins im Wesentlichen quer zu einer Bewegungsrichtung des Stechkopfes. Insbesondere ist das der Öffnungsmechanismus so angeordnet, dass die Klappe bei einer Verschiebung des Magazins entlang der Führungsschienen öffnet.

Insbesondere weist die Zwischenspeichereinrichtung eine Motoreinheit auf. Insbesondere weist die Motoreinheit insbesondere genau einen Motor, und vorzugsweise einen Elektromotor, zur Verschiebung und Öffnung des Magazins auf. Vorteilhaft kann das Magazin durch die Motoreinheit verschoben und geöffnet werden.

Vorzugsweise ist die Steuereinrichtung dazu eingerichtet und ausgebildet Bewegungen der Entnahmeeinrichtung und der Zwischenspeichereinrichtung zu koordinieren. Vorteilhaft wird dadurch ein besonders effizienter Bewegungsablauf, vorzugsweise auch ohne Kollisionen gewährleistet.

Vorteilhaft ist die Steuereinrichtung dazu eingerichtet und ausgebildet eine Entnahme des Spargels aus dem Boden zu ermöglichen, ohne dass das Fahrzeug während der Entnahme einer Spargelstange angehalten werden muss. Vorzugsweise fährt das Fahrzeug insbesondere während der Entnahme einer Spargelstange mit weitgehend gleichmäßiger Geschwindigkeit weiter. Vorteilhaft kann der Spargel dadurch noch schneller geerntet werden.

Zweckmäßig ist die Steuerungseinrichtung und/oder eine Richtungskorrektureinheit derart ausgebildet sind, dass das Fahrzeug während der Entnahme einer Spargelstange weitgehend unter Beibehaltung seiner Fahrtrichtung weiterfährt. Vorteilhaft muss eine Richtung des Fahrzeug so nicht zu entnehmen der Spargelstange angepasst werden.

Insbesondere umfasst die Sensoreinheit wenigstens eine, und vorzugsweise mehrere, drei Kameras umfasst. Vorteilhaft kann durch die Kameras der gesamte Boden überwacht werden.

Vorzugsweise ist die Entnahmeeinrichtung über mindestens einen horizontalen Gelenkarmroboter mit dem Fahrzeug verbunden. Vorteilhaft können dadurch die Entnahmeeinrichtung und eine daran befestigte Zwischenspeichereinrichtung in einem großen Arbeitsbereich verfahren werden.

Weitere Weiterbildungen der Vorrichtung ergeben sich aus der gesamten Anmeldung.

Bei dem erfindungsgemäßen Verfahren zum Ernten von Spargel, mit einer zuvor beschriebenen Vorrichtung, wird das Magazin der Zwischenspeichereinrichtung zur Zwischenspeicherung des Spargels wenigstens teilweise unter dem Stechkopf der Entnahmeeinrichtung positioniert, wobei die Entnahmeeinrichtung nach der Positionierung den Spargel freigibt, sodass dieser in dem Magazin abgelegt wird.

Das Verfahren hat viele Vorteile. Ein erheblicher Vorteil des Verfahrens ist, dass der Spargel direkt in dem Magazin ablegbar ist. Vorteilhaft kann dadurch der Spargel noch schneller geerntet werden.

Zweckmäßig wird der in dem Magazin aufgenommene Spargel in einem Sammelbehälter abgelegt. Vorteilhaft erfolgt die Ablage des Spargels, wenn gerade kein Spargel aus dem Boden entnommen wird oder wenn das Magazin voll ist.

Zweckmäßig hält das Fahrzeug während der Entnahme einer Spargelstange nicht an. Vorteilhaft kann der Spargel dadurch noch schneller und besser geerntet werden.

Zweckmäßig bestimmt die Sensoreinheit zum Erkennen einer einzelnen Spargelstange die Position einer zu erntenden Spargelstange. Zum Entnehmen der Spargelstange muss die Sensoreinheit zum Erkennen einer einzelnen Spargelstange die zu erntende Spargelstange nicht erfassen, insbesondere nicht beobachten oder nicht beobachten müssen, während diese entnommen wird. Vorteilhaft kann dadurch bereits eine neue Spargelstange durch die Sensoreinheit erkannt werden, während die vorherige Spargelstange noch geerntet wird. Vorteilhaft können dadurch noch mehr Spargelstangen aus dem Boden entnommen werden bei gegebenem Zeitraum.

Die Steuereinrichtung berechnet vorzugsweise aus den von der Sensoreinheit ermittelten Daten die Geometrie oder die Topologie des Bodens. Zweckmäßig kann die Steuereinrichtung so auch die Entnahmeeinrichtung gezielt zu der Position der zu erntenden Spargelstange führen.

Weitere vorteilhafte Weiterbildungen des Verfahrens ergeben sich aus der gesamten Anmeldung.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine rein schematische perspektivische Ansicht einer erfindungsgemäßen Vorrichtung;
- Fig. 2: eine rein schematische perspektivische Ansicht der Zwischenspeichereinrichtung der Vorrichtung; und
- Fig. 3: eine rein schematische Seitenansicht der Zwischenspeichereinrichtung.

Es ist nicht notwendig, dass eine erfindungsgemäße Vorrichtung oder das Verfahren alle nachfolgend beschriebenen Merkmale aufweisen. Es ist auch möglich, dass eine erfindungsgemäße Vorrichtung oder das Verfahren nur einzelne Merkmale der nachfolgend beschriebenen Ausführungsbeispiels aufweisen.

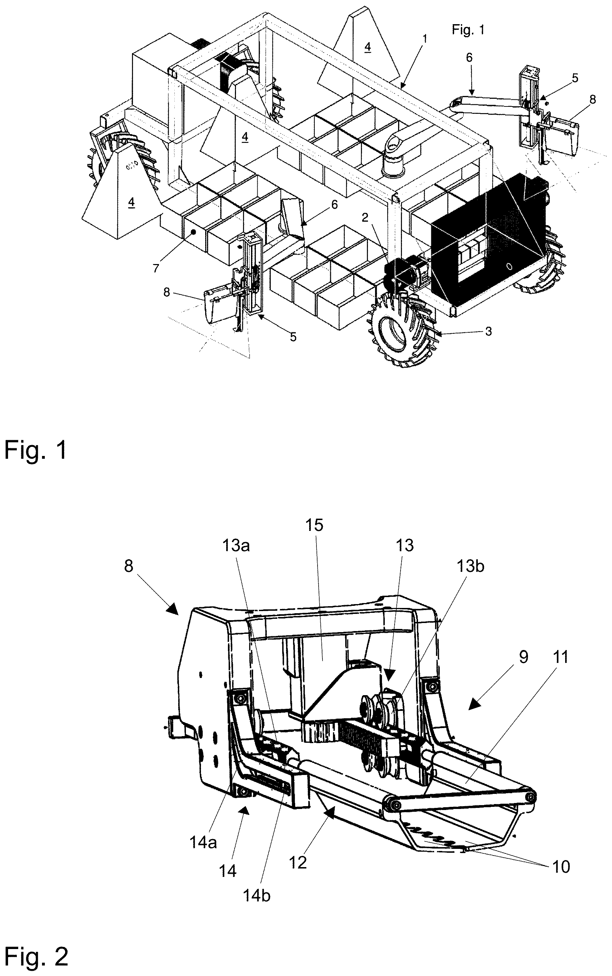

Fig. 1 zeigt eine rein schematische perspektivische Ansicht einer erfindungsgemäßen Vorrichtung. Die Vorrichtung umfasst ein Fahrzeug 1 mit einem Antriebsmotor 2 und Rädern 3, sodass das Fahrzeug 1 über den Boden fahren kann, in dem Spargel angepflanzt ist. Das Fahrzeug verfügt über eine Sensoreinrichtung mit drei Kameras 4 zum Erkennen der einzelnen Spargelstangen, die in einem zur Ernte geeigneten Zustand sind. Weiter umfasst die Vorrichtung zwei Entnahmeeinrichtungen 5 mit jeweils einem Stechkopf 5a. zum Entnehmen einzelner Spargelstangen aus dem Boden. An den Entnahmeeinrichtungen 5 ist jeweils eine Zwischenspeichereinrichtung 8 mit jeweils einem Magazin 9 aufgenommen. Das Magazin 9 der Zwischenspeichereinrichtung 8 ist hier direkt unter dem Stechkopf 5a positionierbar, sodass der aus dem Boden entnommene Spargel direkt in dem Magazin 9 abgelegt werden kann. Vorteilhaft kann eine Ernte des Spargels so noch schneller und kostengünstiger erfolgen. Weiter ist die Übergabe des Spargels direkt aus dem Stechkopf 5a in das Magazin 9 besonders schonend für den Spargel, da dieser aus geringer Höhe fallen gelassen wird.

Es ist weiter eine Steuereinrichtung umfasst, welche die Vorrichtung steuert. Die Steuereinrichtung steuert hier das Fahrzeug 1 und die Sensoreinrichtung sowie die Entnahmeeinrichtung 5 und die Zwischenspeichereinrichtung 8. Vorteilhaft koordiniert die Steuereinrichtung die Bewegungen der Entnahmeeinrichtung 5 und der Zwischenspeichereinrichtung 8.

Die Entnahmeeinrichtung 5 ist hier über einen Gelenkarmroboter 6 an dem Fahrzeug 1 aufgenommen. Die Zwischenspeichereinrichtung 8 ist an der Entnahmeeinrichtung 5 lösbar befestigt, sodass diese leicht ausgetauscht und gewartet werden kann.

Der aus dem Boden entnommene Spargel kann in dem Magazin 9 der Zwischenspeichereinrichtung 8 zwischengespeichert werden und dann in Sammelbehältern 7 abgelegt werden. Dadurch wird eine automatisierte und effiziente und schonende Ernte des Spargels ermöglicht.

Fig. 2 zeigt eine rein schematische perspektivische Detailansicht der Zwischenspeichereinrichtung 8 der Vorrichtung. Die Zwischenspeichereinrichtung 8 umfasst das Magazin 9. Das Magazin 9 ist direkt unter dem Stechkopf 5a der Entnahmeeinrichtung 5 positionierbar, sodass der Spargel direkt aus dem Stechkopf 5a in dem Magazin 9 abgelegt werden kann. Die Magazin 9 umfasst hier zwei bewegliche Klappen 10, die ineinandergreifende Geometrien aufweisen. Die beiden Klappen 10 bilden einen Zwischenspeicherraum 11. Die Klappen 10 sind hier beweglich auf Gleitlagereinheiten 12 gelagert. Durch eine Öffnung der Klappen 10 kann der Spargel aus dem Zwischenspeicherraum 11 des Magazins 9 in die Sammelbehälter 7 abgelegt werden.

Die Zwischenspeichereinrichtung 8 umfasst hier eine Lagerungseinheit 13 zur beweglichen Lagerung und hier zur Verschiebung des Magazins 9 in einer Richtung quer zur Entnahmeeinrichtung 5. Die Lagerungseinheit13 umfasst hier zwei Führungsschienen 14a, die miteinander verbunden sind. Auf den Führungsschienen 14a ist das Magazin 9 hier durch Führungsrollen 13b beweglich aufgenommen. Die Führungsrollen 13b und die Führungsschienen 13a weisen hier jeweils ein Keilprofil auf, welche ineinandergreifen. Das Magazin 9 kann durch eine Motoreinheit 15 entlang der Führungsschienen 13 a verfahren werden. Es ist eine Wartposition vorhanden, in welcher der das Magazin 9 sich nicht unter dem Stechkopf 5a befindet und auf die Aufnahme von Spargel wartet. Durch den Motor 15 der Motoreinheit 15 kann das Magazin 9 dann in eine Aufnahmeposition fahren, in welcher der Spargel aus dem Stechkopf 5a direkt in das Magazin 9 überführt werden kann. Weiter ist eine Öffnungsposition vorhanden, in welcher der Spargel in dem Sammelbehälter 7 ablegbar ist. Alle Positionen können durch Verschiebung des Magazins 9 entlang der Lagerungseinheit 13 quer zur Entnahmeeinrichtung 5 angesteuert werden.

Zur Öffnung der Klappen 10 des Magazin 9 ist ein Öffnungsmechanismus 14 umfasst. Der Öffnungsmechanismus 14 umfasst hier eine Kurvenscheibe 14a und ein hier als Kugellager 14b ausgebildetes Leitelement 14b, welches an der Klappe 10 aufgenommen ist. Durch eine Verschiebung des Magazins 9 entlang der Führungsschiene 13a durch die Motoreinheit 15 kann dadurch eine Öffnung der Klappe 10 erreicht werden, wenn das Leitelement 14b auf der Kurvenscheibe 14a abgleitet.

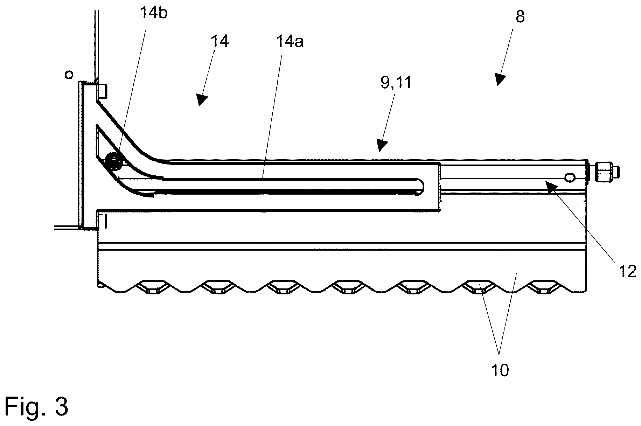

Fig. 3 zeigt eine rein schematische Seitenansicht der Zwischenspeichereinrichtung 8. Das Leitelement 14b ist hier an der Gleitlagereinheit 12 der Klappen 10 des Magazins 9 aufgenommen, sodass sich die Klappen 10 öffnen, wenn das Leitelement 14b hier durch die Kurvenscheibe 14b nach oben gedrückt wird.

Vorteilhaft ist nur genau ein Motor 15 notwendig, um die verschiedenen Positionen des Magazins 9 anzufahren.

### Bezugszeichen:

- 1: Fahrzeug
- 2: Antriebsmotor
- 3: Räder
- 4: Kameras
- 5: Entnahmeeinrichtung
- 5a: Stechkopf
- 6: Gelenkarmroboter
- 7: Sammelbehälter, Erntekiste
- 8: Zwischenspeichereinrichtung
- 9: Magazin
- 10: Klappe
- 11: Zwischenspeicherraum
- 12: Gleitlagereinheit
- 13: Lagerungseinheit
- 13a: Führungsschiene
- 13b: Führungsrolle
- 14: Öffnungsmechanismus
- 14a: Kurvenscheibe
- 14b: Leitelement, Kugellager
- 15: Motoreinheit

## Patentansprüche

1. Vorrichtung zum Ernten von Spargel, umfassend
- wenigstens ein Fahrzeug (1), das über einen Boden fahren kann, in dem Spargel angepflanzt ist;
- wenigstens eine Sensoreinrichtung zum Erkennen einer einzelnen Spargelstange, die in einem zur Ernte geeigneten Zustand ist;
- wenigstens eine Entnahmeeinrichtung (5) mit wenigstens einem Stechkopf (5a) zum Entnehmen einzelner Spargelstangen aus dem Boden;
- wenigstens eine Zwischenspeichereinrichtung (8) zur Zwischenspeicherung des aus dem Boden entnommenen Spargels in wenigstens einem Magazin (9) und die Ablage in einen Sammelbehälter (7); und
- wenigstens eine Steuerungseinrichtung wenigstens zur Steuerung der Entnahmeeinrichtung (5) und der Zwischenspeichereinrichtung (8);
**dadurch gekennzeichnet, dass**
wenigstens das Magazin (9) der Zwischenspeichereinrichtung (8) wenigstens unter dem Stechkopf (5a) positionierbar ist, um den aus dem Boden entnommenen Spargel aufzunehmen.

2. Vorrichtung nach Anspruch 1, wobei die
Zwischenspeichereinrichtung (8) an der Entnahmeeinrichtung (5) aufgenommen und insbesondere lösbar befestigt ist.

3. Vorrichtung nach dem vorhergehenden Anspruch, wobei das Magazin (9) wenigstens eine bewegliche Klappe (10) umfasst, um den Spargel in dem Sammelbehälter (7) abzulegen.

4. Vorrichtung nach dem vorhergehenden Anspruch, wobei das Magazin (9) wenigstens zwei bewegliche Klappen (10) umfasst, welche insbesondere ineinandergreifen und/oder vorzugsweise eine Zwischenspeicherraum (11) bilden.

5. Vorrichtung nach einem der vorhergehenden Ansprüche, wobei die Zwischenspeichereinrichtung (8) wenigstens eine Lagerungseinheit (13) zur beweglichen Lagerung des Magazins (9) umfasst.

6. Vorrichtung nach dem vorhergehenden Anspruch, umfassend wenigstens einen Öffnungsmechanismus (14), umfassend eine Kurvenscheibe (14a) und ein Leitelement (14b), wie ein Kugellager (14b), welches auf der Kurvenscheibe (14a) abgleitet.

7. Vorrichtung nach dem vorhergehenden Anspruch, wobei eine Öffnung des Magazins (9) durch eine Verschiebung des Magazins (9) im Wesentlichen quer zu einer Bewegungsrichtung des Stechkopfes (5a) erfolgt.

8. Vorrichtung nach einem der vorhergehenden Ansprüche, wobei die Zwischenspeichereinrichtung (8) eine Motoreinheit (15) aufweist, und wobei die Motoreinheit (15) insbesondere genau einen Motor aufweist zur Verschiebung des Magazins (9).

9. Vorrichtung nach einem der vorhergehenden Ansprüche, Steuereinrichtung dazu eingerichtet und ausgebildet Bewegungen der Entnahmeeinrichtung (5) und der Zwischenspeichereinrichtung (8) zu koordinieren, und wobei die Steuereinrichtung insbesondere dazu eingerichtet und ausgebildet ist, dass das Fahrzeug (1) während der Entnahme einer Spargelstange nicht angehalten werden muss, und wobei das Fahrzeug (1) insbesondere während der Entnahme einer Spargelstange mit weitgehend gleichmäßiger Geschwindigkeit weiterfährt.

10. Vorrichtung nach einem der vorhergehenden Ansprüche, wobei die Steuerungseinrichtung und/oder eine Richtungskorrektureinheit derart ausgebildet sind, dass das Fahrzeug (1) während der Entnahme einer Spargelstange weitgehend unter Beibehaltung seiner Fahrtrichtung weiterfährt und/oder wobei die Sensoreinheit wenigstens eine, vorzugsweise mehrere, und insbesondere drei Kameras (4) umfasst.

11. Vorrichtung nach einem der vorhergehenden Ansprüche,
**dadurch gekennzeichnet, dass** die Entnahmeeinrichtung (5) über mindestens einen horizontalen Gelenkarmroboter (SCARA) (6) mit dem Fahrzeug (1) verbunden ist.

12. Verfahren zum Ernten von Spargel mit einer Vorrichtung nach einem der vorhergehenden, **dadurch gekennzeichnet, dass** das Magazin der Zwischenspeichereinrichtung (8) zur Zwischenspeicherung des Spargels wenigstens teilweise unter dem Stechkopf (5a) der Entnahmeeinrichtung (5) positioniert wird, wobei die Entnahmeeinrichtung (5) nach der Positionierung den Spargel freigibt, sodass dieser direkt von dem Stechkopf (5a) in dem Magazin (8) abgelegt wird.

13. Verfahren nach dem vorergehenden Anspruch, wobei der in dem Magazin (8) aufgenommen Spargel in einem Sammelbehälter (7) abgelegt wird, und wobei insbesondere das Fahrzeug (1) während der Entnahme einer Spargelstange nicht anhält.

14. Verfahren nach dem vorhergehenden Anspruch, wobei das von der Sensoreinheit zum Erkennen einer einzelnen Spargelstange die Position einer zu erntenden Spargelstange bestimmt wird und dass die Sensoreinheit zum Erkennen einer einzelnen Spargelstange die zu erntende Spargelstange nicht erfassen oder nicht erfassen müssen, insbesondere nicht beobachten oder nicht beobachten müssen, während diese entnommen wird.

15. Verfahren nach einem der beiden vorhergehenden Ansprüche, wobei die Steuereinrichtung aus den von der Sensoreinheit ermittelten Daten die Geometrie oder Topologie des Bodens berechnen und so auch die Entnahmeeinrichtung (5) gezielt zu der Position der zu erntenden Spargelstange führen kann.
